# EUROPÄISCHE PATENTSCHRIFT

(11) **EP 3 491 038 B1**
(45) Veröffentlichungstag und Bekanntmachung des Hinweises auf die Patenterteilung: **09.09.2020**
(21) Anmeldenummer: 17755070.4
(22) Anmeldetag: 28.07.2017
(51) Int. Cl.: C08G 18/12, C08G 18/32, C08G 18/18, C08G 18/20, C08G 18/48, C08G 18/50, C08G 18/66, C08K 5/521, B65D 83/68, C08G 101/00, C08G 18/40, C08G 18/42, C08G 18/76, C08J 9/00, C08J 9/14, C08K 5/49

(54) **WEICHSCHAUMFORMULIERUNG**
SOFT FOAM FORMULATION
SOFT MOUSSE FORMULATION

(30) Priorität: 28.07.2016 DE 102016113988
(43) Veröffentlichungstag der Anmeldung: 05.06.2019
(73) Patentinhaber: Sika Technology AG, 6340 Baar (CH)
(72) Erfinder: WAGNER, Natalie, 9050 Appenzell (CH)
(74) Vertreter: Sika Patent Attorneys
(86) Internationale Anmeldenummer: PCT/EP2017/069225
(87) Internationale Veröffentlichungsnummer: WO 2018/020031

(56) Entgegenhaltungen:
- EP-A2- 0 597 281
- DE-A1- 10 108 445

## Beschreibung

Die Erfindung betrifft eine zweikomponentige Formulierung für die Erzeugung von offenzelligen Weichschäumen mit einer Druckfestigkeit von ≤ 1 N/cm², enthalten in einer 2K-Aerosoldose mit einer Vernetzerhülse, die vor Ausbringung der Formulierung aus der Aerosoldose geöffnet werden kann, sodass ihr Inhalt in die Aerosoldose austritt, wobei eine erste Komponente in der Aerosoldose enthalten ist und eine mit der ersten Komponente reaktive zweite Komponente separat in der Vernetzerhülse, und wobei die Aerosoldose ein Prepolymer aus 25 bis 35 Gew.-% MDI und 40 bis 55 Gew.-% einer Polyolmischung, das freie Isocyanatgruppen aufweist, sowie 10 bis 21 Gew.-% einer Treibgasmischung enthält und die Vernetzerhülse 4 bis 10 Gew.-% einer Vernetzermischung.

Dosenschäume sind in zahlreichen Varianten für verschiedene Zwecke bekannt. Beispielsweise werden sie im Bauwesen für die Montage von Fenster-und Türzargen eingesetzt, zum Verkleben von Materialien, für Isolierzwecke und zum Verfüllen von Hohlräumen und Bauwerksfugen verwandt. In aller Regel handelt es sich dabei um Polyurethanschäume, die bei der Vernetzung von Isocyanatgruppen enthaltenden Prepolymeren mit Polyolen oder Wasser entstehen.

Herkömmliche Prepolymerzusammensetzungen für Polyurethanschäume enthalten eine Prepolymerkomponente, die einen Mindestgehalt an reaktiven Isocyanatgruppen aufweist. Das Prepolymer selbst ist ein Polymer geeigneter Viskosität mit endständigen Isocyanatgruppen. Um Polyurethanprepolymere mit endständigen Isocyanatgruppen zu erhalten, ist es üblich, polyfunktionelle Alkohole mit einem Überschuss an monomeren Polyisocyanaten zur Reaktion zu bringen.

Gebräuchliche Polyisocyanate sind beispielsweise Diisocyanatodiphenylmethan, üblicherweise als MDI bezeichnet, Tolylendiisocyanat (TDI), 1,6-Diisocyanatohexan (HDI), 1,5-Diisocyanatonaphthalin (NDI) und Isophorondiisocyanat (IPDI). Alle diese Polyisocyanate können als reine Substanzen wie auch als Gemisch verschiedener Isomerer oder als Mischung mit höheren Homologen (beispielsweise Roh-MDI) eingesetzt werden. Reaktive Derivate sind beispielsweise dimere und trimere Formen der Polyisocyanate. Wichtig ist eine Funktionalität von ≥ 2.

Zur Herstellung der Prepolymere werden die Polyisocyanate mit hydroxylgruppenhaltigen Polyethern, Polestern oder mit Polyolen umgesetzt, wobei auf eine für den jeweiligen Zweck geeignete Viskosität des dabei entstehenden Prepolymers zu achten ist. Zur Steuerung und Beschleunigung der Umsetzung findet diese in Gegenwart von Katalysatoren statt, häufig Aminkatalysatoren.

Für die Umsetzung zu Prepolymer werden vielfach Polyetherpolyole und Polyesterpolyole eingesetzt, insbesondere solche mit einer Hydroxylzahl von 30 bis 350.

Die Prepolymere sind in Aerosoldosen enthalten und werden mithilfe von Treibgasen aus der Dose ausgebracht und verschäumt, wobei in der Umgebung enthaltene Feuchtigkeit die Schaumbildung unterstützt. Die Treibgase sind unter dem in der Aerosoldose herrschenden Druck flüssig und verdampfen nach Ausbringung aus der Aerosoldose.

Bei Dosenschäumen unterscheidet man zwischen einkomponentigen und zweikomponentigen Schäumen. 1K-Polyurethanschäume vernetzen mithilfe von auf Oberflächen oder in der Umgebungsluft vorhandenem Wasser. 2K-Polyurethanschäume vernetzen mithilfe einer zweiten Komponente, die getrennt vom sonstigen Inhalt der Aerosoldose in einer geschlossenen Innen- oder Vernetzerhülse enthalten ist und mengenmäßig auf die reaktiven Isocyanatgruppen des Prepolymers abgestimmt ist.

Bekannt sind ferner sogenannte 1,5K-Polyurethanschäume, die Übergangsformen zwischen 1K- und 2K-Schäumen darstellen. Bei den 1,5K-Schäumen wird dem Prepolymer vor dem Ausbringen aus der Druckdose eine zur Umsetzung der darin noch enthaltenen freien Isocyanatgruppen nicht ausreichende Menge einer zweiten Komponente zugesetzt. Die endgültige Aushärtung des Schaums erfolgt mithilfe von Luftfeuchtigkeit.

Aerosoldosen mit Vernetzerhülsen sind vielfach beschrieben, etwa in der WO 85/00157 A. Die Vernetzerhülse kann unmittelbar vor Ausbringung des Schaums von außen geöffnet werden, beispielsweise durch einen Stößel oder Stift, sodass der Inhalt in das in der umgebenden Aerosoldose enthaltene Prepolymer austreten und durch Schütteln eingemischt werden kann.

Die zweite Komponente ist in der Regel ein Polyol oder Wasser. Sie wird unmittelbar vor der Schaumausbringung noch in der Dose freigesetzt; die Ausbringung des Schaums muss danach zügig erfolgen, da ansonsten die Gefahr besteht, dass durch die Reaktion zwischen den beiden Komponenten der Doseninhalt so sehr verdickt, dass eine Ausbringung unmöglich wird. Die Topfzeit beträgt in der Regel nur wenige Minuten.

Die Formulierungen für die Erzeugung von Dosenschäumen enthalten darüber hinaus noch Additive zur Beeinflussung der Schaumeigenschaften, etwa Viskositätsregulierer, Zellöffner, Stabilisatoren und Flammschutzmittel.

Die herkömmlichen Polyurethanschäume, wie sie beispielsweise für Montagezwecke eingesetzt werden, sind relativ starr und hart, mit einer Druckfestigkeit von in der Regel deutlich mehr als 10 N/cm². Diese Schäume sind geeignet, Lasten zu tragen und zu fixieren, haben aber eine relativ geringe Fließfähigkeit. In der Regel sind die für solche Schäume verwandten Formulierungen auf eine rasche Verfestigung eingestellt. Das Eindringvermögen in tiefe Hohlräume, beispielsweise in Hohlprofile größerer Länge, ist begrenzt, auch wegen ihres (erwünschten) Haftvermögens an Oberflächen. Sie haben in der Regel ein hohes Wärmedämmvermögen, aber Defizite bei der Schalldämmung.

Der Erfindung liegt die Aufgabe zugrunde, einen Dosenschaum für die Hohlraumausschäumung bereitzustellen. Der Schaum soll eine gute Fließfähigkeit und wenig Schrumpfneigung aufweisen, damit er Hohlräume, beispielsweise auch in länglichen Metallprofilen, vollständig und dauerhaft ausfüllen kann. Neben Wärmedämmeigenschaften soll er gute Schalldämmeigenschaften besitzen.

Diese Aufgabe wird mit einer Formulierung der eingangs genannten Art gelöst, bei der die Polyolmischung wenigstens ein trifunktionelles Polyetherpolyol und wenigstens ein bifunktionelles Polyesterpolyol zusammen mit einem Flammschutzmittel, einem Schaumstabilisator, einem Zellöffner und einem Aminkatalysator enthält und die Vernetzermischung Ethylenglykol im Unterschuss zu den freien Isocyanatgruppen des Prepolymers und einen Aminkatalysator.

Die erfindungsgemäße Formulierung zeichnet sich durch die Abstimmung der einzelnen Komponenten und Maßnahmen aufeinander aus, die die gewünschten Schaumeigenschaften für die Hohlraumausschäumung gewährleisten.

Es wurde gefunden, dass die erforderliche Fließfähigkeit des Schaums nur mit einem 2K-Weichschaum mit einer speziellen Auswahl der Polyolkomponenten zu erreichen ist. Die Weichschaumeigenschaften ergeben sich durch die Auswahl der Polyolkomponenten in der Polyolmischung und in der Vernetzerhülse. Durch die Vernetzung des Prepolymers mit Ethylenglykol im Unterschuss behält der ausgebrachte Schaum seine Fließeigenschaften über eine zur Applikation hinreichende Zeit.

Vorzugsweise reicht die Menge an Ethylenglykol in der Vernetzerhülse aus, 80 bis 95 % der freien Isocyanatgruppen im Prepolymer abzusättigen, insbesondere 85 bis 90 %.

Als Flammschutzmittel kommen insbesondere niedrigviskose flüssige Phosphate und Phosphite in Frage, etwa Tris(2-ethylhexyl)phosphat, Tris(2-chlorpropyl)phosphat (TMCP), Triethylphosphat und organische Phosponatester. Als Flammschutzmittel kommen weiterhin halogenierte Polyole in Frage, die in das Präpolymer eingebaut werden können.

Zur guten Fließfähigkeit des erfindungsgemäßen Schaumsystems trägt auch die Verwendung von Phosphaten, insbesondere Tris(2-chlorisopropyl)phosphat (TMCP) bei. TMCP ist ein an und für sich bekanntes Flammschutzmittel, das zudem zusätzlich als Weichmacher dient. Es wurde jetzt gefunden, dass TMCP auch günstig auf die Rheologie wirkt und zur Fließfähigkeit des ausgebrachten Schaums beiträgt. Die flammenhemmende Wirkung ist bei vielen Anwendungen, auch im Automobilbau, erwünscht und kann gegebenenfalls durch Zugabe weiterer flammhemmender Mittel, etwa halogenierten Polyetherolen, noch verbessert werden. Das TMCP ist in der erfindungsgemäß zum Einsatz kommenden Polyolmischung enthalten, wobei das Gewichtsverhältnis der Polyole zum TMCP vorzugsweise im Bereich von 85 zu 15 bis 60 zu 40 liegt.

Die zur Herstellung des Prepolymers verwandte Polyolmischung enthält erfindungsgemäß wenigstens ein trifunktionelles Polyetherpolyol und wenigstens ein bifunktionelles Polyesterpolyol. In dieser Konstellation wird einerseits ein hinreichend vernetztes Prepolymer und andererseits ein gewisser Grad an Weichheit erzeugt. Als Polyetherpolyole kommen insbesondere alkoxylierte Glycerylether infrage, etwa Polyoxypropylenglycerylether. Als Polyesterpolyole kommen insbesondere solche vom PET-Typ infrage.

Erfindungsgemäß wird das Prepolymer aus 25 bis 35 Gew.-% MDI und 40 bis 55 Gew.-% der Polyolmischung gebildet. Als MDI können dabei die reinen Isomeren oder Mischungen der Isomeren verwandt werden, bevorzugt ist aber die Verwendung von Roh-MDI, wie eingangs angeführt.

Die Polyolmischung enthält neben den Polyolen noch Flammschutzmittel, wie oben erwähnt, sowie einen oder mehrere Schaumstabilisatoren, Zellöffner und Aminkatalysatoren. Die an und für sich bekannten Schaumstabilisatoren sollen den Schaum volumenmäßig stabilisieren, d.h. dem Schrumpf bei der Aushärtung entgegenwirken. Zum gleichen Zweck werden Zellöffner zugegeben, die ein rasches Ausgasen der Zellen ermöglichen, bevor das darin enthaltene Treibmittel die Zellwände aufweicht. Der Aminkatalysator dient der Beschleunigung der Prepolymerbildung. Gleichzeitig soll er die endgültige Vernetzung des ausgebrachten Schaums im Hohlraum mit dort vorhandener oder über den Luftaustausch eindringender Feuchtigkeit katalysieren. Hierdurch ergibt sich auch ein dem Schrumpf entgegenwirkender Nachschäumeffekt. Bevorzugt sind deshalb Aminkatalysatoren, die die Reaktion von Isocyanatgruppen mit Wasser katalysieren, etwa Katalysatoren auf Basis von Morpholinen, etwa DMDEE (2,2-Dimorpholinodiethylether).

In der Aerosoldose ist zudem noch das Treibmittel vorhanden, in der Regel eine Mischung aus Propan, Butan und Dimethylether. Insbesondere macht der Dimethylether 40 bis 70 Gew.-% der Treibgasmischung aus. Die Treibgasmischung selbst macht insgesamt 10 bis 21 Gew.-% der gesamten Formulierung, unter Einschluss der Anteile in der Vernetzerhülse, aus.

Die Vernetzerhülse enthält als Vernetzer Ethylenglykol in einer Menge, die nicht ausreicht, die freien Isocyanatgruppen im Prepolymer abzusättigen. Daneben enthält die Vernetzerhülse wenigstens einen Aminkatalysator, der die Reaktion von Ethylenglykol mit dem Prepolymer zu katalysieren vermag. Es handelt sich dabei vorzugsweise um Katalysatoren, die eine Dimethylaminogruppe enthalten, beispielsweise Bis-(2-dimethylaminoethyl)ether und/oder 2-(2-Dimethylaminoethyl)ethanol. Durch Katalysatoren mit einer Dimethylaminogruppe wird die Vernetzungsreaktion mit dem Prepolymer etwas "gestreckt", sodass sich die Topfzeit und die fließfähige Phase des Schaums für die genannten Zwecke hinreichend verlängert.

Dem Inhalt der Vernetzerhülse kann eine gewisse Menge Flammschutzmittel, etwa TMCP, oder auch einer anderen unreaktiven Substanz, etwa geringe Mengen eines Lösungsmittels, zugemischt werden, um eine Verdünnung des Ethylenglykols und damit eine Verlangsamung der Vernetzung herbeizuführen. Ein weiterer Grund ist gegebenenfalls die vollständige Auffüllung der Vernetzerhülse, um ein Eindringen des umgebenden Inhalts der unter Druck stehenden Aerosoldose zu verhindern. Die Vernetzerhülse ist in der Regel konstruktionsbedingt nicht in das Druckregime der Aerosoldose einbezogen.

Die Vernetzerhülse kann insbesondere auch eine kleine Menge eines Farbstoffs enthalten, der es ermöglicht, die Homogenität des ausgebrachten Schaums nach Auslösung der Vernetzerhülse anhand der Farbverteilung zu überprüfen. Aerosoldosen mit Vernetzerhülse müssen nach dem Auslösen der Vernetzerhülse hinreichend geschüttelt werden, um eine gleichmäßige Durchmischung der beiden Komponenten zu erreichen. Die Farbverteilung zeigt dem Nutzer, ob er eine gleichmäßige Verteilung der Vernetzermischung herbeigeführt hat.

Der Farbstoff in der Vernetzerhülse ist vorzugsweise ein Reaktivfarbstoff mit einer reaktionsfähigen Hydroxylgruppe.

Die Vernetzerhülse enthält insgesamt 4 bis 10 Gew.-% der gesamten Formulierung.

Vorzugsweise macht das MDI 28 bis 35 Gew.-% der gesamten Formulierung aus, die Polyolmischung 43 bis 52 Gew.-%, die Treibgasmischung 12 bis 18 Gew.-% und die Vernetzermischung 5 bis 8 Gew.-%.

Es sei darauf hingewiesen, dass alle Prozentangaben sich auf die gesamte Formulierung, d.h. das Gewicht aller Komponenten in der Aerosoldose und in der Vernetzerhülse insgesamt, beziehen, soweit nicht anders angegeben.

Die Erfindung betrifft ferner Verwendung der vorstehend beschriebenen Formulierungen, unabhängig davon, ob sie einer 2K-Aerosoldose oder einem anders gearteten Druckbehälter enthalten sind, zur Hohlraumausschäumung, insbesondere von Profilen und in Kraftfahrzeugkarosserien. Dabei eingeschlossen sind Verwendungen zum Schallschutz.

Die Erfindung wird durch die nachfolgenden Beispiele näher erläutert.

### Beispiel 1

Eine Polyolmischung für eine Schaumformulierung wurde wie folgt zusammengestellt:
73,0 Gew.-Teile Polyetherpolyol, OHZ 56
15,6 Gew.-Teile TMCP
5,0 Gew.-Teile arom. Polyesterpolyol auf PET-Basis, OHZ 200
   1,0 Gew.-Teile Polyoxypropylentriol, OHZ 56
   1,0 Gew.-Teile Schaumstabilisator
   1,4 Gew.-Teile Zellöffner
   1,4 Gew.-Teile Katalysator (DMDEE)

Hierzu wurde die nachstehende Vernetzermischung erstellt:
77,50 Gew.-Teile Ethylenglykol
20,70 Gew.-Teile TMCP
   0,70 Gew.-Teile Katalysator (2,2'-Dimethylaminoethylether)
   0,50 Gew.-Teile Katalysator (2-(2-Dimethylaminoethoxy)ethanol)
   0,60 Gew. -Teile Farbstoff, OHZ 100

44,0 Gew.-Teile der Polyolmischung wurden mit 33,8 Gewichtsteilen Roh-MDI (Desmodur®) zu einem Prepolymer umgesetzt. Die Vernetzerhülse wurde mit 6,10 Gew.-Teilen der Vernetzermischung befüllt, die in den Boden der Aerosoldose eingesetzt wurde. In die geschlossene Aerosoldose wurden anschließend 7,8 Gew.-Teile einer Propan/Butan-Mischung und 8,5 Gew.-Teile Dimethylether unter Druck eingefüllt. Es ergab sich eine funktionsfähige Schaumformulierung für einen weich-elastischen Schaum mit gutem Fließverhalten nach der Ausbringung und einer gegenüber kommerziellen Hartschaumformulierungen deutlich verbesserten Schalldämpfung (-65 dB gegenüber -60 dB).

### Beispiel 2

Die Polyolmischung in Beispiel 1 wurde wie folgt geändert:
72,6 Gew.-Teile Polyetherpolyol, OHZ 56
20,0 Gew.-Teile TMCP
   3,0 Gew.-Teile Polyesterpolyol auf PET-Basis, OHZ 200
   1,0 Gew.-Teile halogeniertes Polyetherol, OHZ 239
   1,0 Gew.-Teile Siliconstabilisator
   1,0 Gew.-Teile Zellöffner
   1,4 Gew.-Teile DMDEE

51,3 Gew.-Teile der Polyolmischung wurden mit 29,3 Gew.-Teilen Roh-MDI zu einem Prepolymer umgesetzt. Die Vernetzerhülse wurde mit 5,5 Gew.-Teilen der Vernetzermischung aus Beispiel 1 befüllt und in den Dosenboden eingesetzt. In die geschlossene Aerosoldose wurden dann 5,5 Gew.-Teile einer Propan/Butan-Mischung und 8,5 Gew.-Teile Dimethylether eingedrückt. Bei der Ausbringung der Formulierung ergab sich ein weich-elastischer Schaum, der nach 8 min klebfrei war, nach 12 min schneidbar und eine End-Druckfestigkeit von 0,8 N/cm² aufwies. Die Schalldämmeigenschaften waren mit denen des Schaums aus Beispiel 1 vergleichbar.

## Patentansprüche

1. Zweikomponentige Formulierung für die Erzeugung von offenzelligen Weichschäumen mit einer Druckfestigkeit von ≤ 1 N/cm², enthalten in einer 2K-Aerosoldose mit einer Vernetzerhülse, die vor Ausbringung der Formulierung aus der Aerosoldose geöffnet werden kann, so dass ihr Inhalt in die Aerosoldose austritt, wobei eine erste Komponente in der Aerosoldose enthalten ist und eine mit der ersten Komponente reaktive zweite Komponente separat in der Vernetzerhülse und wobei die
Aerosoldose ein Prepolymer aus 25 bis 35 Gew.-% MDI und 40 bis 55 Gew.-% einer Polyolmischung, das freie Isocyanatgruppen aufweist, sowie 10 bis 21 Gew.-% einer Treibgasmischung enthält und die
Vernetzerhülse 4 bis 10 Gew.-% einer Vernetzermischung,
wobei die Gewichtsangaben auf das Gewicht der Formulierung bezogen sind,
**dadurch gekennzeichnet, dass**
die Polyolmischung wenigstens ein trifunktionelles Polyetherpolyol und wenigstens ein bifunktionelles Polyesterpolyol zusammen mit einem Flammschutzmittel, einem Schaumstabilisator, einem Zellöffner und einem Aminkatalysator enthält, und
die Vernetzermischung Ethylenglykol im Unterschuss zu den freien Isocyanatgruppen des Prepolymers und einen Aminkatalysator enthält.

2. Formulierung nach Anspruch 1, **dadurch gekennzeichnet, dass** das Ethylenglykol in der Vernetzerhülse ausreicht, 80 bis 95 % der freien Isocyanatgruppen des Prepolymers abzusättigen.

3. Formulierung nach Anspruch 2, **dadurch gekennzeichnet, dass** das Ethylenglykol in der Vernetzerhülse ausreicht, 85 bis 90 % der freien Isocyanatgruppen des Prepolymers abzusättigen.

4. Formulierung nach einem der vorstehenden Ansprüche, **dadurch gekennzeichnet, dass** das Gewichtsverhältnis von Polyolen zum Flammschutzmittel in der Polyolmischung im Bereich von 85 zu 15 bis 60 zu 40 liegt.

5. Formulierung nach einem der vorstehenden Ansprüche, **dadurch gekennzeichnet, dass** die Polyolmischung Flammschutzmittel enthält.

6. Formulierung nach Anspruch 5, **dadurch gekennzeichnet, dass** die Polyolmischung Ethylenglykol und Flammschutzmittel in einem Gewichtsverhältnis im Bereich von 35 zu 65 bis 60 zu 40 enthält.

7. Formulierung nach einem der vorstehenden Ansprüche, **dadurch gekennzeichnet, dass** die Polyolmischung einen Katalysator enthält, der die Reaktion von Isocyanatgruppen mit Wasser zu katalysieren vermag, insbesondere DMDEE.

8. Formulierung nach einem der vorstehenden Ansprüche, **dadurch gekennzeichnet, dass** die Vernetzermischung zwei Katalysatoren enthält, die die Reaktion von Isocyanatgruppen mit Ethylenglykol zu katalysieren vermögen, insbesondere Katalysatoren mit wenigstens einer Dimethylaminogruppe.

9. Formulierung nach Anspruch 8, **dadurch gekennzeichnet, dass** die Vernetzermischung Bis-(2-dimethylaminoethyl)ether und 2-(2-Dimethylaminoethyl)ethanol als Katalysatoren enthält.

10. Formulierung nach einem der vorstehenden Ansprüche, **dadurch gekennzeichnet, dass** die Vernetzungsmischung einen Farbstoff enthält, insbesondere einen Reaktivfarbstoff.

11. Formulierung nach einem der vorstehenden Ansprüche, **dadurch gekennzeichnet, dass** die Polyolmischung ein halogeniertes aliphatisches Polyol enthält.

12. Formulierung nach einem der vorstehenden Ansprüche, **dadurch gekennzeichnet, dass** die Polyolmischung Propan, Butan und Dimethylether als Treibgasmischung enthält.

13. Formulierung nach Anspruch 12, **dadurch gekennzeichnet, dass** die Treibgasmischung 40 bis 70 Gew.-%, bezogen auf die Treibgasmischung, Dimethylether enthält.

14. Formulierung nach einem der vorstehenden Ansprüche, **dadurch gekennzeichnet, dass** das MDI Roh-MDI ist.

15. Verwendung der Formulierung eines der Ansprüche 1 bis 14 zum Ausschäumen von Hohlräumen.

16. Verwendung nach Anspruch 15 zur Schalldämmung.

## Claims

1. Two-component formulation for producing open-cell flexible foams having a compressive strength of ≤ 1N/cm², contained in a 2-component aerosol can with a crosslinker sleeve which can be opened prior to deploying the formulation from the aerosol can such that the contents thereof enter the aerosol can, wherein a first component is present in the aerosol can and a second component that is reactive to the first component is present separately in the crosslinker sleeve and wherein the
aerosol can comprises a prepolymer composed of 25 to 35% by weight MDI and 40 to 55% by weight of a polyol mixture having free isocyanate groups, and 10 to 21% by weight of a propellant gas mixture and the
crosslinker sleeve comprises 4 to 10% by weight of a crosslinker mixture,
wherein the weight data are based on the weight of the formulation,
**characterized in that**
the polyol mixture comprises at least one trifunctional polyether polyol and at least one bifunctional polyester polyol, together with a flame retardant, a foam stabilizer, a cell opener and an amine catalyst, and the crosslinker mixture comprises ethylene glycol in deficiency relative to the free isocyanate groups of the prepolymer and an amine catalyst.

2. Formulation according to Claim 1, **characterized in that** the ethylene glycol in the crosslinker sleeve is sufficient to saturate 80 to 95% of the free isocyanate groups of the prepolymer.

3. Formulation according to Claim 2, **characterized in that** the ethylene glycol in the crosslinker sleeve is sufficient to saturate 85 to 90% of the free isocyanate groups of the prepolymer.

4. Formulation according to any of the preceding claims, **characterized in that** the ratio by weight of polyols to the flame retardant in the polyol mixture is in the range from 85:15 to 60:40.

5. Formulation according to any of the preceding claims, **characterized in that** the polyol mixture comprises flame retardant.

6. Formulation according to Claim 5, **characterized in that** the polyol mixture comprises ethylene glycol and flame retardant in a ratio by weight in the range from 35:65 to 60:40.

7. Formulation according to any of the preceding claims, **characterized in that** the polyol mixture comprises a catalyst which is capable of catalyzing the reaction of isocyanate groups with water, in particular DMDEE.

8. Formulation according to any of the preceding claims, **characterized in that** the crosslinker mixture comprises two catalysts which are capable of catalyzing the reaction of isocyanate groups with ethylene glycol, particularly catalysts having at least one dimethylamino group.

9. Formulation according to Claim 8, **characterized in that** the crosslinker mixture comprises bis(2-dimethylaminoethyl) ether and 2-(2-dimethylaminoethyl)ethanol as catalysts.

10. Formulation according to any of the preceding claims, **characterized in that** the crosslinker mixture comprises a dye, in particular a reactive dye.

11. Formulation according to any of the preceding claims, **characterized in that** the polyol mixture comprises a halogenated aliphatic polyol.

12. Formulation according to any of the preceding claims, **characterized in that** the polyol mixture comprises propane, butane and dimethyl ether as propellant gas mixture.

13. Formulation according to Claim 12, **characterized in that** the propellant gas mixture comprises 40 to 70% by weight dimethyl ether, based on the propellant gas mixture.

14. Formulation according to any of the preceding claims, **characterized in that** the MDI is crude MDI.

15. Use of the formulation of any of Claims 1 to 14 for foam-filling cavities.

16. Use according to Claim 15 for sound insulation.

## Revendications

1. Formulation à deux composants pour la production de mousses souples à alvéoles ouvertes dotées d'une résistance à la compression ≤ 1 N/cm², contenue dans une canette d'aérosol 2K dotée d'une cartouche d'agent de réticulation, qui peut être ouverte avant l'application de la formulation sortant de la canette d'aérosol, de sorte que son contenu sort dans la canette d'aérosol, un premier composant étant contenu dans la canette d'aérosol et un deuxième composant réactif avec le premier composant étant contenu séparément dans la cartouche d'agents de réticulation et
la canette d'aérosol contenant un prépolymère composé de 25 à 35 % en poids de MDI et de 40 à 55 % en poids d'un mélange de polyols, qui présente des groupes isocyanate libres, ainsi que 10 à 21 % en poids d'un mélange de gaz propulseurs et
la cartouche d'agents de réticulation contenant 4 à 10 % en poids d'un mélange d'agents de réticulation,
les données en poids se rapportant au poids de la formulation,
**caractérisée en ce que** le mélange de polyols contient au moins un polyéther polyol trifonctionnel et au moins un polyester polyol bifonctionnel conjointement avec un agent ignifugeant, un stabilisateur de mousse, un agent d'ouverture d'alvéoles et un catalyseur de type amine, et
le mélange d'agents de réticulation contient de l'éthylèneglycol en défaut par rapport aux groupes isocyanate libres du prépolymère et un catalyseur de type amine.

2. Formulation selon la revendication 1, **caractérisée en ce que** l'éthylèneglycol dans la cartouche d'agents de réticulation suffit pour saturer 80 à 95 % des groupes isocyanate libres du prépolymère.

3. Formulation selon la revendication 2, **caractérisée en ce que** l'éthylèneglycol dans la cartouche d'agents de réticulation suffit pour saturer 85 à 90 % des groupes isocyanate libres du prépolymère.

4. Formulation selon l'une quelconque des revendications précédentes, **caractérisée en ce que** le rapport pondéral des polyols à l'agent ignifugeant dans le mélange de polyols se situe dans la plage allant de 85 sur 15 jusqu'à 60 sur 40.

5. Formulation selon l'une quelconque des revendications précédentes, **caractérisée en ce que** le mélange de polyols contient des agents ignifugeants.

6. Formulation selon la revendication 5, **caractérisée en ce que** le mélange de polyols contient de l'éthylèneglycol et des agents ignifugeants en un rapport pondéral dans la plage allant de 35 sur 65 jusqu'à 60 sur 40.

7. Formulation selon l'une quelconque des revendications précédentes, **caractérisée en ce que** le mélange de polyols contient un catalyseur, qui peut catalyser la réaction de groupes isocyanate avec de l'eau, en particulier le DMDEE.

8. Formulation selon l'une quelconque des revendications précédentes, **caractérisée en ce que** le mélange d'agents de réticulation contient deux catalyseurs, qui peuvent catalyser la réaction de groupes isocyanate avec l'éthylèneglycol, en particulier des catalyseurs comportant au moins un groupe diméthylamino.

9. Formulation selon la revendication 8, **caractérisée en ce que** le mélange d'agents de réticulation contient du bis-(2-diméthylaminoéthyl)éther et du 2-(2-diméthylaminoéthyl)éthanol en tant que catalyseurs.

10. Formulation selon l'une quelconque des revendications précédentes, **caractérisée en ce que** le mélange de réticulation contient un colorant, en particulier un colorant réactif.

11. Formulation selon l'une quelconque des revendications précédentes, **caractérisée en ce que** le mélange de polyols contient un polyol aliphatique halogéné.

12. Formulation selon l'une quelconque des revendications précédentes, **caractérisée en ce que** le mélange de polyols contient du propane, du butane et du diméthyléther en tant que mélange de gaz propulseurs.

13. Formulation selon la revendication 12, **caractérisée en ce que** le mélange de gaz propulseurs contient 40 à 70 % en poids, par rapport au mélange de gaz propulseurs, de diméthyléther.

14. Formulation selon l'une quelconque des revendications précédentes, **caractérisée en ce que** le MDI est du MDI brut.

15. Utilisation de la formulation selon l'une quelconque des revendications 1 à 14 pour le moussage d'espaces creux.

16. Utilisation selon la revendication 15 pour l'isolation phonique.
